# EUROPÄISCHE PATENTSCHRIFT

(11) **EP 0 736 452 B1**
(45) Veröffentlichungstag und Bekanntmachung des Hinweises auf die Patenterteilung: **31.05.2000**
(21) Anmeldenummer: 96103499.8
(22) Anmeldetag: 06.03.1996
(51) Int. Cl.: B64C 31/02, B64D 27/24

(54) **Segelflugzeug mit Hilfsmotor**
Glider with auxiliary motor
Planeur à moteur auxiliaire

(30) Priorität: 05.04.1995 DE 19512816
(43) Veröffentlichungstag der Anmeldung: 09.10.1996
(73) Patentinhaber: Lange Flugzeugbau GmbH, 66482 Zweibrücken (DE)
(72) Erfinder: Schicke, Utz, 76356 Weingarten (DE)
(74) Vertreter: Grünecker, Kinkeldey, Stockmair & Schwanhäusser Anwaltssozietät

(56) Entgegenhaltungen:
- DE-A- 3 113 864
- DE-A- 3 138 376
- FR-A- 2 251 475
- FR-A- 2 265 614
- US-A- 3 957 230

## Beschreibung

Die Erfindung betrifft ein Segelflugzeug mit Hilfstriebwerk, das einen Elektromotor, eine Batterieeinrichtung zur Energieversorgung des Elektromotors und einen durch den Elektromotor antreibbaren Propeller aufweist.

Derartige Segelflugzeuge sind beispielsweise aus-der FR-A-2265614 bekannt. Diese Segelflugzeuge sind zum einen weitgehend von Startpersonal unabhängig. Zum anderen reduziert sich bei derartigen Segelflugzeugen die Außenlandegefahr erheblich. Aus diesen Gründen kann mit diesen Segelflugzeugen in der Regel die Zahl der Flugstunden und die Zahl der geflogenen Überlandkilometer vervielfacht werden.

In herkömmlichen Segelflugzeugen mit Hilfstriebwerk werden hauptsächlich Zweitaktmotoren, die sich durch relativ geringes Gewicht und kleine Abmessungen auszeichnen, als Triebwerke eingesetzt.

Ein Nachteil dieser Motoren ist jedoch ihre erhebliche Lärmemission.

Es ist deshalb Aufgabe der Erfindung, die herkömmlichen Segelflugzeuge mit Hilfstriebwerken zu verbessern.

Diese Aufgabe wird für ein Segelflugzeug der eingangs genannten Art dadurch gelöst, daß die Batterieeinrichtung als nichttragendes Teil in den Tragflächen angeordnet ist.

Durch die Verwendung des Elektromotors kann die Lärmemission des Hilfstriebwerks erheblich reduziert werden. Weiterhin hat sich gezeigt, daß eine Anordnung der Batterieeinrichtung in den Tragflächen zu der erwünschten Flugleistung, also insbesondere einer erforderlichen Steiggeschwindigkeit von mindestens 2 m/sec und einer maximalen Steighöhe von über 1800 m führt.

In vorteilhafter Ausgestaltung der Erfindung wird ein Elektromotor mit einem Wirkungsgrad, der größer oder gleich 70% ist, verwendet. Ein hoher Wirkungsgrad des Motors bedeutet bei gleicher Batterieeinrichtung eine höhere Motorleistung und somit auch eine höhere Flugleistung. Diese erhöhte Flugleistung spiegelt sich in einer erhöhten Steiggeschwindigkeit und einer vergrößerten maximalen Steighöhe wider.

Vorteilhafterweise kann ein Asynchron-Drehstrommotor verwendet werden. Diese spezielle Form eines Elektromotors kann einen Wirkungsgrad, der größer oder gleich 90% ist, aufweisen. Darüber hinaus kann dieser Asynchron-Drehstrommotor mit einem Gewicht, das kleiner oder gleich 30 kg ist, ausgebildet werden. Durch diesen hohen Wirkungsgrad und das geringe Motorgewicht lassen sich die oben genannten Flugleistungen weiter verbessern.

Außerdem hat sich gezeigt, daß die Batterieeinrichtungen vorteilhafterweise im vorderen Tragflächenbereich angeordnet werden können. Hierdurch kann eine günstigere Gewichtsverteilung des Segelflugzeugs während des Flugs erzielt werden.

In einer weiteren vorteilhaften Ausbildung kann die Batterieeinrichtung zwei Batteriestränge aufweisen, die jeweils in einer Tragfläche angeordnet werden können. Weiterhin können die Batteriestränge parallel geschaltet und derart ausgelegt werden, daß sie voneinander getrennt abschaltbar sind. Diese Ausbildung hat den Vorteil, daß mit einem verbleibenden Batteriestrang bis zum Erreichen einer ausreichenden Sicherheitshöhe weitergeflogen werden kann, falls es aufgrund einer Störung notwendig sein sollte, einen Batteriestrang abzuschalten.

Gemäß einer weiteren vorteilhaften Ausbildung der Erfindung ist eine Steuereinrichtung vorgesehen, welche die Batterieeinrichtung und den Elektromotor mittels eines Mikroprozessors steuert.

Außerdem können vorteilhafterweise ein oder mehrere Detektoren zur Detektion der Spannung und der Temperatur des Batteriestrangs und/oder ein Detektor zur Detektion der Temperatur des Elektromotors und/oder ein Detektor zur Detektion einer Fehlfunktion der Steuereinrichtung vorgesehen werden. Mittels der durch diesen Detektor erfaßten Meßwerte können Fehlfunktionen der Batterieeinrichtung, der Steuereinrichtung und des Motors erkannt werden und gegebenenfalls ein Batteriestrang, beispielsweise über eine Sicherung, abgeschaltet werden. Dadurch kann mit dem verbleibenden Batteriestrang noch bis zu einer ausreichenden Sicherheitshöhe weitergeflogen werden.

Als Fehlfunktion der Batterieeinrichtung sind beispielsweise eine Unterspannung der Batterie bzw. ein Zellenausfall oder eine Übertemperatur der Batterie denkbar. Als Fehlfunktion des Motors und der Steuereinrichtung lassen sich eine Übertemperatur des Motors bzw. eine Übertemperatur oder ein Kurzschluß in der Steuereinrichtung angeben.

Vorteilhafterweise kann die Steuereinrichtung eine Leistungselektronik umfassen, da der anzusteuernde Motor im Niederspannungsbereich arbeitet und demnach durch die Steuerung sehr hohe Ströme geschaltet werden müssen.

Gemäß einer weiteren vorteilhaften Ausbildung ist eine Batterie für Fluginstrumente vorgesehen, die als Notstromversorgung für die Steuereinrichtung betätigbar ist. Hierdurch kann sichergestellt werden, daß bei völliger Erschöpfung oder Ausfall der Batterieeinrichtung eine Stromversorgung für die Steuereinrichtung zur Verfügung steht, so daß ein unkontrolliertes Verhalten der Motorsteuerung aufgrund eines Zusammenbruchs der Mikroprozessorsteuerung verhindert werden kann.

Dadurch ist es auch im Falle eines völligen Ausfalls der Batterieeinrichtung möglich, das Hilfstriebwerk in die Stellung zu bringen, die es während des Segelflugbetriebs einnimmt, und somit das Flugzeug kontrolliert im Segelflug zu steuern.

In einer weiteren vorteilhaften Ausbildungsform kann ein Propeller mit einem Wirkungsgrad, der größer oder gleich 75% ist, versehen werden. Ebenso wie ein hoher Wirkungsgrad des Motors lassen sich hierdurch ebenfalls die Flugleistungen, insbesondere die erforderlichen Steigleistungen, verbessern.

Außerdem kann der Propeller als lärmarmer Propeller vorgesehen werden. Dies führt zu einer weiteren Verringerung der Lärmemission.

In weiterer vorteilhafter Ausgestaltung ist das Segelflugzeug in Leichtbauweise unter weitgehender Verwendung von Kohlefaser und/oder Hochmodul-Kohlefaser ausgebildet. Hierdurch kann ebenfalls eine Gewichtsersparnis erzielt werden, die sich wiederum in erhöhten Flugleistungen widerspiegelt.

Weitere vorteilhafte Ausbildungen und zusätzliche Vorteile der Erfindung ergeben sich für den Fachmann darüber hinaus aus der folgenden Beschreibung einer bevorzugten Ausführungsform der Erfindung unter Bezugnahme auf die Zeichnungen. Hierin zeigen:
- Fig. 1: eine Seitenansicht eines Segelflugzeugs mit Hilfstriebwerk gemäß einer Ausführungsform der vorliegenden Erfindung,
- Fig.2: eine Draufsicht auf das Segelflugzeug mit Hilfstriebwerk gemäß der Ausführungsform, und
- Fig.3: eine Blockschaltbild zur Erläuterung einer Steuerung einer Batterieeinrichtung gemäß der Ausführungsform.

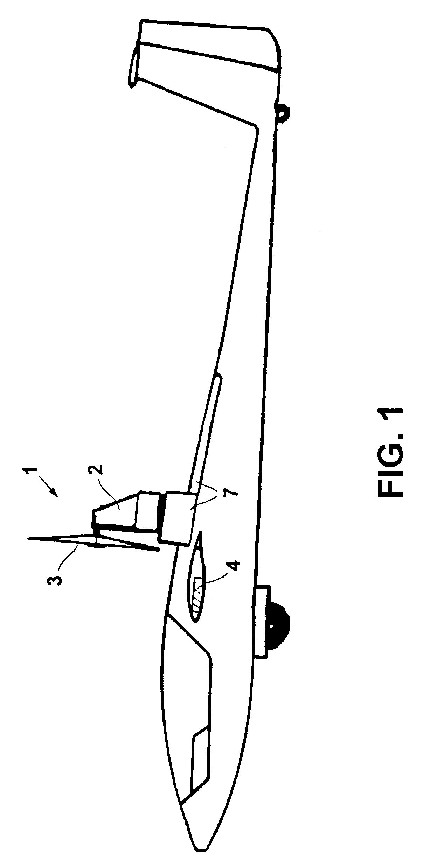

In Fig. 1 ist eine Seitenansicht des Segelflugzeugs mit Hilfstriebwerk dargestellt. Das Hilfstriebwerk ist mit dem Bezugszeichen 1 bezeichnet. Es umfaßt einen Motor 2 und einen Propeller 3.

In Fig. 1 ist ein Klapptriebwerk gezeigt. Zum Motorflug wird das während des Segelflugs im Rumpf untergebrachte Triebwerk aus demselben herausgeklappt.

Neben der gezeigten sind auch andere Anordnungen des Triebwerks möglich. Beispielsweise kann das Triebwerk im Bug- oder Heckbereich des Segelflugzeugs vorgesehen werden.

Als Propeller 3 ist gemäß Fig. 1 ein starrer Propeller, der in Längsrichtung in dem Rumpf aufgenommen werden kann, vorgesehen. Es sind jedoch auch andere Propellerformen einsetzbar. Beispielsweise kann ein Schwenkpropellersystem, in dem beide Propellerblätter im wesentlichen parallel zueinander gestellt werden können, verwendet werden. Dieses System eignet sich insbesondere, wenn im Rumpf nicht genügend Platz zur Verfügung steht, um einen starren Propeller aufzunehmen. Als weitere Propellerform ist der Gelenkpropeller bekannt, der insbesondere geeignet ist, wenn das Triebwerk im Bugbereich des Segelflugzeugs vorgesehen werden soll.

Weiterhin sind in Fig. 1 Abdeckeinrichtungen 7 gezeigt, die dafür sorgen, daß bei eingefahrenem Triebwerk ein glattflächiger Rumpf entsteht, um so die Segelflugeigenschaften des Segelflugzeugs nicht zu beeinträchtigen.

Der Propeller 3 ist in Form eines lärmarmen Propellers mit einem Wirkungsgrad, der größer oder gleich 75%, vorzugsweise größer oder gleich 80%, ist, ausgebildet.

Der Elektromotor ist derart ausgebildet, daß er einen Wirkungsgrad, der größer oder gleich 70% ist, aufweist. Vorzugsweise kann ein Asynchron-Drehstrommotor eingesetzt werden. Mit diesem Motor kann ein Wirkungsgrad, der größer oder gleich 90% ist, sowie ein Gewicht, das kleiner oder gleich 30 kg ist, realisiert werden. Die Leistung des Motors beträgt ungefähr 32 kW.

Der Rumpf und die Tragflächen des Segelflugzeugs sind in Leichtbauweise unter weitgehender Verwendung von Kohlefaser, auch Hochmodul-Kohlefaser, hergestellt. Dadurch ergibt sich einerseits ein geringes Gewicht des Flugzeugs und andererseits eine ausreichende Stabilität des Flugzeugs.

Durch die hohen Wirkungsgrade des Elektromotors 2 und des Propellers 3, durch das geringe Gewicht des Motors 2, sowie durch die Leichtbauweise der Tragflächen und des Rumpfs können die Flugleistungen, die den mit herkömmlichen Verbrennungsmotoren erzielten entsprechen, erreicht werden. Mit dem dargestellten Segelflugzeug kann eine mindest erforderliche Steiggeschwindigkeit von mehr als 2 m/sec erzielt werden. Die maximale Steiggeschwindigkeit beträgt über 3m/sec. Damit ist es auch möglich bei schwierigen Wetterbedingungen und/oder bei kurzen Flugplätzen sicher zu starten. Die maximale Steighöhe liegt über 1800 m. Damit ist es einerseits möglich, die erforderliche Startüberhöhung zu erreichen, um in einigen alpinen Flugplätzen zum Thermikeinstieg zu gelangen. Im Flachland lassen sich mit 1800 m Steighöhe, beispielsweise bei einem Start auf 600 m Höhe eine überbrückbare Distanz von 90 km erreichen. Dadurch ist in vielen Fällen sogar eine Rückkehr zum Heimatflugplatz möglich, wenn beispielsweise eine Wetterverschlechterung eintritt.

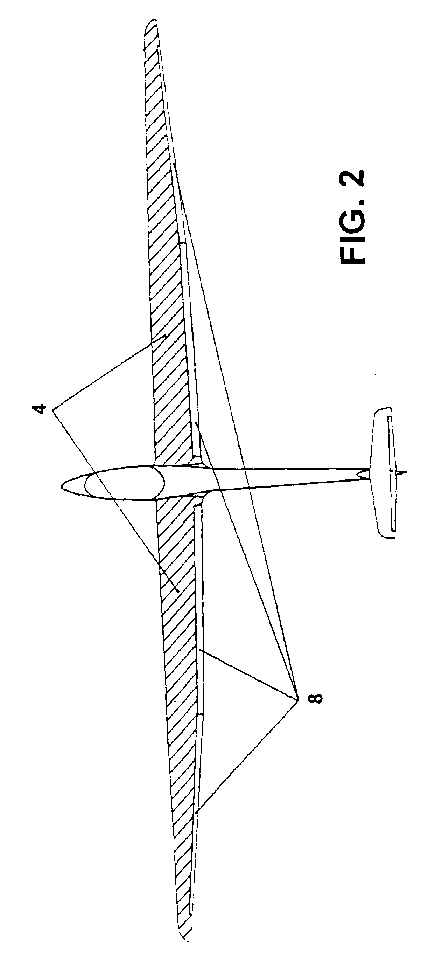

In Fig. 2 ist eine Draufsicht auf das Segelflugzeug aus Fig. 1 gezeigt. Die schraffierten Flächen bezeichnen die Bereiche, in denen die Batterieeinrichtung 4 vorgesehen werden kann. Mit dem Bezugszeichen 8 sind die Steuerflächen des Segelflugzeugs bezeichnet. Vorzugsweise kann die Batterieeinrichtung 4 allerdings in bezug auf die Flugrichtung im vorderen Tragflächenbereich angeordnet werden. Dadurch kann eine günstigere Gewichtsverteilung für den Flug erzielt werden.

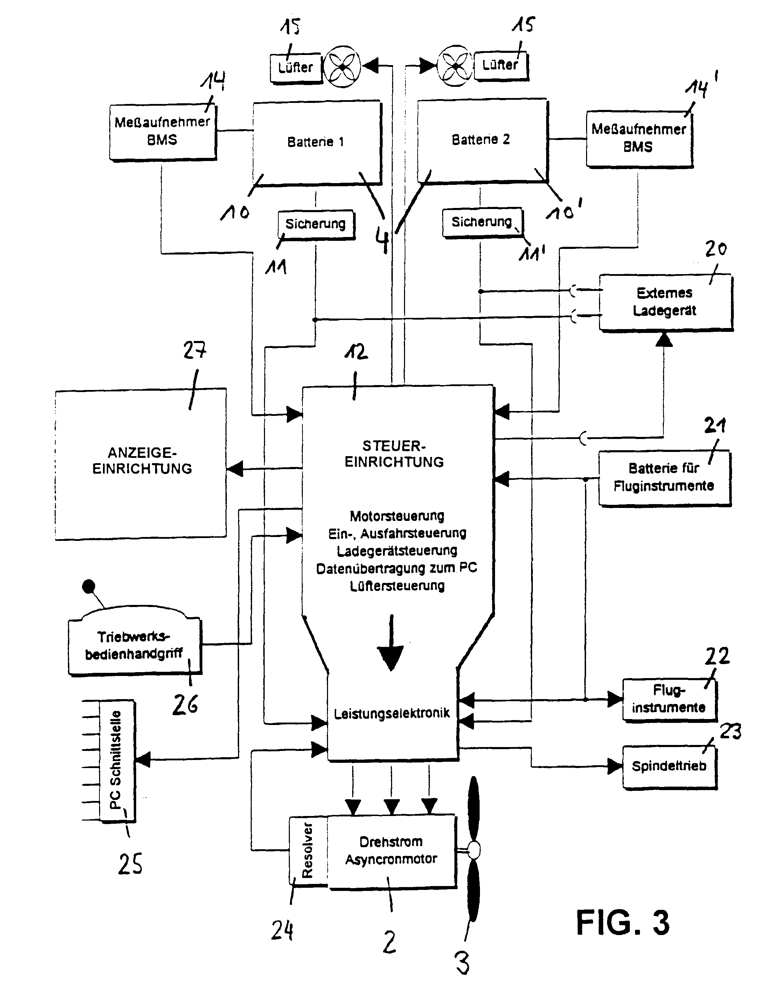

Die Batterieeinrichtung 4 weist mindestens eine Energiedichte von 40 Wh/kg, vorzugsweise eine Energiedichte von mindestens 49 Wh/kg, auf. Weiterhin besteht die Batterieeinrichtung 4 aus zwei Batteriesträngen (10 und 10' in Fig. 3), die parallel zueinander geschaltet sind. Jeder Strang umfaßt 60 Batteriezellen, so daß sich bei Verwendung von Metallhydrid-Zellen eine Systemspannung von ca. 62 V ergibt. Sollte es bei dieser Anordnung aufgrund einer Störung notwendig sein, einen Strang abzuschalten, so kann mit dem verbleibenden Strang bis zum Erreichen einer ausreichenden Sicherheitshöhe weitergeflogen werden.

Die Anzahl und die Art der Batteriezellen sind lediglich beispielhaft zu verstehen; entsprechend können auch andere Anordnungen mit vergleichbarer Energiedichte, vergleichbarem Gewicht und vergleichbarer Spannung bzw. bei Verwendung eines anderen Elektromotors eine Batterieeinrichtung mit Kenndaten, die an diesen Motor angepaßt sind, verwendet werden.

Fig. 3 stellt ein Blockschaltbild zur Erläuterung einer Steuerung der Batterieeinrichtung dar. Dieses System umfaßt, wie bereits erwähnt, zwei Batteriestränge 10 und 10'. Zur Sicherung der Batteriestränge sind jeweils eine Sicherung 11 und 11' vorgesehen. Diese Sicherungen können bei Erfüllung bestimmter Abschaltkriterien eine Leistungselektronik einer mikroprozessorgesteuerten Steuereinheit 12 entsprechend abschalten. Als Abschaltkriterien sind eine Unterspannung der Batterie bzw. ein Zellenausfall, eine Übertemperatur der Batterieeinrichtung, eine Übertemperatur des Elektromotors, eine Übertemperatur der Elektronik, sowie ein Kurzschluß vorgesehen.

Zur Überprüfung, ob diese Kriterien erfüllt sind oder nicht, sind Batteriedetektoren 14 und 14', ein Detektor zur Aufnahme der Motortemperatur und ein Detektor, der eine Fehlfunktion der Steuereinrichtung erfaßt, vorgesehen.

Die Batteriedetektoren 14 und 14' bestehen jeweils aus sechs Modulen in jedem Flügel, die an je zehn Zellen die Spannung und die Zellentemperatur messen. Die Anzahl der Detektoren ist lediglich beispielhaft und kann, falls eine genauere Detektion erwünscht oder eine andere Batterieeinrichtung verwendet wird, entsprechend angepaßt werden. Der Detektor zum Detektieren der Motortemperatur, sowie der Detektor zum Detektieren einer Fehlfunktion der Steuereinheit sind von herkömmlicher Natur.

Die gemessenen Parameter werden schließlich in der Steuereinrichtung 12 ausgewertet. Entsprechend dieser Auswertung werden dann die Sicherungen 11 und 11' abgeschaltet.

Weiterhin sind für jeden Batteriestrang ein Lüfter 15 bzw. 15' vorgesehen.

Die Steuereinrichtung 12 dient unter anderem zur Ein- und Ausfahrsteuerung des Motors. Das Ein- und Ausfahren des Motors wird in herkömmlicher Weise durch einen Spindeltrieb 23, der durch die Steuereinrichtung angesteuert wird, realisiert. Das Eingangssignal für die Ein- und Ausfahrsteuerung erhält die Steuereinrichtung 12 über einen Triebwerksbedienhandgriff 26.

Neben der Ein- und Ausfahrsteuerung übernimmt die Steuereinrichtung 12 auch die Steuerung des Aufladevorgangs der Batteriestränge 10 und 10'. Hierzu wird die Steuereinrichtung 12 an ein externes Ladegerät 20 angeschlossen, das seinerseits an die Batteriestränge 10 und 10' angeschlossen wird.

Weiterhin führt die Steuereinrichtung 12 eine Datenübertragung zu einem PC zu Diagnosezwecken über eine PC-Schnittstelle 25 durch. Darüber hinaus werden von der Steuereinrichtung 12 auch die Lüfter 15 und 15' für die Batteriestränge 10 und 10' gesteuert.

Die Steuereinrichtung umfaßt, wie bereits erwähnt, eine Leistungselektronik zur Steuerung des Asynchron-Drehstrommotors 2. Diese Leistungselektronik ist erforderlich, da das System im Niederspannungsbereich arbeitet und demnach hohe Ströme geschaltet werden müssen. Hierzu können SIPMOS-Leistungstransistoren oder Relais verwendet werden. Die Steuereinrichtung kann vorzugsweise auf die dem Fachmann bekannte Art und Weise gegen elektromagnetische Störeinflüsse abgeschirmt werden.

Der Asynchron-Drehstrommotor umfaßt einen Resolver 24. Dieser Resolver 24 erfaßt die Stellung des Rotors und dient außerdem der Leistungselektronik zur phasenrichtigen Ansteuerung der einzelnen Wicklungen, sowie zum Positionieren des Propellers vor dem Einfahren des Triebwerks.

Zur Abfuhr der in der Leistungselektronik entstehenden Wärme können dem Fachmann bekannte Einrichtungen, beispielsweise Ventilatoren, Kühlrippen und dergleichen, verwendet werden.

An die Steuereinrichtung 12 ist ein Display 27 angeschlossen. Über dieses Display 27 können die Betriebsparameter des Systems dargestellt werden.

Neben den Batteriesträngen 10 und 10' ist eine herkömmliche Batterie 21 für die Fluginstrumente 22 vorgesehen. Hierzu kann eine herkömmliche 12 V Batterie im Leitwerk angeordnet werden.

In der dargestellten Anordnung dient diese Batterie 21 zusätzlich als Notstromversorgung der Steuereinrichtung 12 mit automatischer Umschaltung bei völliger Erschöpfung oder Ausfall der Batteriestränge 10 und 10'. Hierdurch kann ein unkontrolliertes Verhalten der Motorsteuerung, die aus dem Zusammenbruch der Mikroprozessorsteuerung resultieren könnte, verhindert werden.

## Patentansprüche

1. Segelflugzeug mit einem Hilfstriebwerk (1), das einen Elektromotor (2), eine Batterieeinrichtung (4) zur Energieversorgung des Elektromotors und einen durch den Elektromotor (2) antreibbaren Propeller (3) aufweist,
**dadurch gekennzeichnet,**
daß die Batterieeinrichtung (4) als nichttragendes Teil in den Tragflächen (5) angeordnet ist.

2. Segelflugzeug nach Anspruch 1, **dadurch gekennzeichnet,** daß der Motor einen Wirkungsgrad, der größer oder gleich 70% ist, aufweist.

3. Segelflugzeug nach Anspruch 2, **dadurch gekennzeichnet,** daß der Motor ein Asynchron-Drehstrommotor ist.

4. Segelflugzeug nach Anspruch 3, **dadurch gekennzeichnet,** daß der Asynchron-Drehstrommotor einen Wirkungsgrad, der größer oder gleich 90% ist, aufweist.

5. Segelflugzeug nach einem der Ansprüche 3 oder 4, **dadurch gekennzeichnet,** daß der Motor ein Gewicht, das kleiner oder gleich 30 kg ist, aufweist.

6. Segelflugzeug nach einem der vorangegangenen Ansprüche, **dadurch gekennzeichnet,** daß die Batterieeinrichtung (4) in bezug auf die Flugrichtung im vorderen Tragflächenbereich vorgesehen ist.

7. Segelflugzeug nach einem der vorangegangenen Ansprüche, **dadurch gekennzeichnet,** daß die Batterieeinrichtung (4) eine Energiedichte, die größer oder gleich 40 Wh/kg, vorzugsweise größer oder gleich 49 Wh/kg ist, aufweist.

8. Segelflugzeug nach einem der vorangegangenen Ansprüche, **dadurch gekennzeichnet,** daß die Batterieeinrichtung (4) zwei Batteriestränge (10, 10') aufweist.

9. Segelflugzeug nach Anspruch 8, **dadurch gekennzeichnet,** daß jeder Batteriestrang (10, 10') mehrere Module umfaßt, die jeweils mehrere Batteriezellen aufweisen.

10. Segelflugzeug nach Anspruch 9, **dadurch gekennzeichnet,** daß jede Zelle eine Metallhydrid-Zelle umfaßt.

11. Segelflugzeug nach einem der Ansprüche 8 bis 10, **dadurch gekennzeichnet,** daß die Batteriestränge (10, 10') parallel geschaltet und voneinander getrennt abschaltbar sind.

12. Segelflugzeug nach einem der Ansprüche 8 bis 11, **dadurch gekennzeichnet,** daß jeweils eine Sicherung (11, 11') zum Abschalten des entsprechenden Batteriestrangs (10, 10') vorgesehen ist.

13. Segelflugzeug nach Anspruch 12, **dadurch gekennzeichnet,** daß für jeden Batteriestrang (10, 10') jeweils ein oder mehrere Detektoren (12, 12') zur Detektion der Spannung und der Temperatur des Batteriestrangs oder der Module des Batteriestrangs vorgesehen sind.

14. Segelflugzeug nach Anspruch 12, **dadurch gekennzeichnet,** daß ein Detektor zur Detektion der Temperatur des Elektromotors (2) vorgesehen ist.

15. Segelflugzeug nach einem der vorangegangenen Ansprüche, **dadurch gekennzeichnet,** daß eine Steuereinrichtung (12) vorgesehen ist, die die Batterieeinrichtung (4) und den Elektromotor (2) mittels eines Mikroprozessors steuert.

16. Segelflugzeug nach Anspruch 15, **dadurch gekennzeichnet,** daß die Steuereinrichtung (12) eine Leistungselektronik umfaßt.

17. Segelflugzeug nach Anspruch 16, **dadurch gekennzeichnet,** daß ein Detektor zur Detektion einer Fehlfunktion der Steuereinrichtung (12) vorgesehen ist.

18. Segelflugzeug nach Anspruch 15 oder 16 in Verbindung mit Anspruch 13, **dadurch gekennzeichnet,** daß die Steuereinrichtung (12) so ausgelegt ist, daß die Sicherungen (11, 11') bei Überschreitung einer vorbestimmten Temperatur oder bei Unterschreitung einer vorbestimmten Spannung des Batteriestrangs oder der Module des Batteriestrangs betätigbar sind.

19. Segelflugzeug nach Anspruch 15 oder 16 in Verbindung mit Anspruch 14, **dadurch gekennzeichnet,** daß die Steuereinrichtung (12) so ausgelegt ist, daß die Sicherungen (11, 11') bei Überschreitung einer vorbestimmten Temperatur des Elektromotors (2) betätigbar sind.

20. Segelflugzeug nach Anspruch 15 oder 16 in Verbindung mit Anspruch 17, **dadurch gekennzeichnet,** daß die Steuereinrichtung (12) so ausgelegt ist, daß die Sicherungen (11, 11') bei Detektion einer Fehlfunktion der Steuereinrichtung (12) betätigbar sind.

21. Segelflugzeug nach einem der Ansprüche 15 bis 20, **dadurch gekennzeichnet,** daß eine Batterie (13) für Fluginstrumente vorgesehen ist, die als Notstromversorgung für die Steuereinrichtung (12) betätigbar ist.

22. Segelflugzeug nach einem der vorangegangenen Ansprüche, **dadurch gekennzeichnet,** daß der Propeller einen Wirkungsgrad, der größer oder gleich 75%, vorzugsweise größer oder gleich 80% ist, aufweist.

23. Segelflugzeug nach einem der vorangegangenen Ansprüche, **dadurch gekennzeichnet,** daß der Propeller (3) als lärmarmer Propeller ausgebildet ist.

24. Segelflugzeug nach einem der vorangegangenen Ansprüche, **dadurch gekennzeichnet,** daß das Segelflugzeug in Leichtbauweise unter weitgehender Verwendung von Kohlefaser und/oder Hochmodul-Kohlefaser ausgebildet ist.

## Claims

1. Glider with an auxiliary power unit (1), which has an electric motor (2), a battery device (4) for supplying energy to the electric motor and a propeller (3), which can be driven by the electric motor (2), characterised in that the battery device (4) is disposed as a non-structural part in the wings (5).

2. Glider according to Claim 1, characterised in that the efficiency of the motor is greater than or equal to 70%.

3. Glider according to Claim 2, characterised in that the motor is an asynchronous three-phase motor.

4. Glider according to Claim 3, characterised in that the efficiency of the asynchronous three-phase motor is greater than or equal to 90%.

5. Glider according to either Claim 3 or 4, characterised in that the weight of the motor is less than or equal to 30 kg.

6. Glider according to any one of the preceding Claims, characterised in that the battery device (4) is provided in the front wing region in relation to the flight direction.

7. Glider according to any one of the preceding Claims, characterised in that the energy density of the battery device (4) is greater than or equal to 40 Wh/kg, preferably greater than or equal to 49 Wh/kg.

8. Glider according to any one of the preceding Claims, characterised in that the battery device (4) has two battery branches (10, 10').

9. Glider according to Claim 8, characterised in that each battery branch (10, 10') comprises a plurality of modules, which each have a plurality of battery cells.

10. Glider according to Claim 9, characterised in that each cell comprises a metallic hydride cell.

11. Glider according to any one of Claims 8 to 10, characterised in that the battery branches (10, 10') are connected in parallel and can be switched off separately from one another.

12. Glider according to any one of Claims 8 to 11, characterised in that a respective safety device (11, 11') is provided to switch off the corresponding battery branch (10, 10').

13. Glider according to Claim 12, characterised in that one or a plurality of detector(s) (12, 12') is/are provided for each battery branch (10, 10') to detect the voltage and the temperature of the battery branch or the modules of the battery branch.

14. Glider according to Claim 12, characterised in that a detector is provided to detect the temperature of the electric motor (2).

15. Glider according to any one of the preceding Claims, characterised in that a control device (12) is provided which controls the battery device (4) and the electric motor (2) by means of a microprocessor.

16. Glider according to Claim 15, characterised in that the control device (12) comprises power electronics.

17. Glider according to Claim 16, characterised in that a detector is provided to detect a malfunction of the control device (12).

18. Glider according to Claim 15 or 16 in conjunction with Claim 13, characterised in that the control device (12) is designed such that the safety devices (11, 11') can be actuated when the battery branch or the modules of the battery branch exceed a predetermined temperature or fall below a predetermined voltage.

19. Glider according to Claim 15 or 16 in conjunction with Claim 14, characterised in that the control device (12) is designed such that the safety devices (11, 11') can be actuated when the electric motor (2) exceeds a predetermined temperature.

20. Glider according to Claim 15 or 16 in conjunction with Claim 17, characterised in that the control device (12) is designed such that the safety devices (11, 11') can be actuated when a malfunction of the control device (12) is detected.

21. Glider according to any one of Claims 15 to 20, characterised in that a battery (13) is provided for flight instruments, which battery can be actuated as an emergency power supply for the control device (12).

22. Glider according to any one of the preceding Claims, characterised in that the efficiency of the propeller is greater than or equal to 75%, preferably greater than or equal to 80%.

23. Glider according to any one of the preceding Claims, characterised in that the propeller (3) is constructed as a low-noise propeller.

24. Glider according to any one of the preceding Claims, characterised in that the glider is of light-weight construction, largely using carbon fibres and/or high-modulus carbon fibres.

## Revendications

1. Planeur avec un propulseur auxiliaire (1) qui comprend un moteur électrique (2), un dispositif à batteries (4) pour alimenter en énergie le moteur électrique et une hélice (3) entraînée par le moteur électrique (2),
**caractérisé** en ce
que le dispositif à batteries (4) est disposé en tant qu'élément non porteur dans les surfaces portantes (5).

2. Planeur selon la revendication 1, **caractérisé** en ce que le moteur présente un rendement qui est supérieur ou égal à 70%.

3. Planeur selon la revendication 2, **caractérisé** en ce que le moteur est un moteur triphasé asynchrone.

4. Planeur selon la revendication 3, **caractérisé** en ce que le moteur triphasé asynchrone présente un rendement qui est supérieur ou égal à 90%.

5. Planeur selon une des revendications 3 ou 4, **caractérisé** en ce que le moteur présente un poids qui est inférieur ou égal à 30 kg.

6. Planeur selon une des revendications précédentes, **caractérisé** en ce que le dispositif à batteries (4) est prévu dans la zone de surface portante avant par rapport à la direction de vol.

7. Planeur selon une des revendications précédentes, **caractérisé** en ce que le dispositif à batteries (4) présente une densité d'énergie qui est supérieure ou égale à 40 Wh/kg, de préférence supérieure ou égale à 49 Wh/kg.

8. Planeur selon une des revendications précédentes, **caractérisé** en ce que le dispositif à batteries (4) comporte deux lignes de batteries (10, 10').

9. Planeur selon la revendication 8, **caractérisé** en ce que chaque ligne de batteries (10, 10') comprend plusieurs modules qui présentent chacun plusieurs éléments de batterie.

10. Planeur selon la revendication 9, **caractérisé** en ce que chaque élément comprend un élément à hydrure métallique.

11. Planeur selon une des revendications 8 à 10, **caractérisé** en ce que les lignes de batteries (10, 10') sont montées en parallèle et peuvent être coupées séparément l'une de l'autre.

12. Planeur selon une des revendications 8 à 11, **caractérisé** en ce qu'il est prévu chaque fois un coupe-circuit (11, 11') pour couper la ligne de batteries (10, 10') correspondante.

13. Planeur selon la revendication 12, **caractérisé** en ce que pour chaque ligne de batteries (10, 10'), il est prévu un ou plusieurs détecteurs (12, 12') pour détecter la tension et la température de la ligne de batteries ou des modules de la ligne de batteries.

14. Planeur selon la revendication 12, **caractérisé** en ce qu'un détecteur est prévu pour détecter la température du moteur électrique (2).

15. Planeur selon une des revendications précédentes, **caractérisé** en ce qu'il est prévu un dispositif de commande (12) qui commande le dispositif à batteries (4) et le moteur électrique (2) au moyen d'un microprocesseur.

16. Planeur selon la revendication 15, **caractérisé** en ce que le dispositif de commande (12) comprend une électronique de puissance.

17. Planeur selon la revendication 16, **caractérisé** en ce qu'un détecteur est prévu pour détecter un mauvais fonctionnement du dispositif de commande (12).

18. Planeur selon la revendication 15 ou 16 en liaison avec la revendication 13, **caractérisé** en ce que le dispositif de commande (12) est conçu de telle manière que les coupe-circuit (11, 11') puissent entrer en action en cas de dépassement d'une température prédéterminée ou en cas de passage sous une tension prédéterminée de la ligne de batteries ou des modules de la ligne de batteries.

19. Planeur selon la revendication 15 ou 16 en liaison avec la revendication 14, **caractérisé** en ce que le dispositif de commande (12) est conçu de telle manière que les coupe-circuit (11, 11') puissent entrer en action en cas de dépassement d'une température prédéterminée du moteur électrique (2).

20. Planeur selon la revendication 15 ou 16 en liaison avec la revendication 17, **caractérisé** en ce que le dispositif de commande (12) est conçu de telle manière que les coupe-circuit (11, 11') puissent entrer en action en cas de détection d'un mauvais fonctionnement du dispositif de commande (12).

21. Planeur selon une des revendications 15 à 20, **caractérisé** en ce qu'il est prévu une batterie (13) pour instruments de vol, qui peut être utilisée pour une alimentation en courant de secours du dispositif de commande (12).

22. Planeur selon une des revendications précédentes, **caractérisé** en ce que l'hélice présente un rendement qui est supérieur ou égal à 75%, de préférence supérieur ou égal à 80%.

23. Planeur selon une des revendications précédentes, **caractérisé** en ce que l'hélice (3) est une hélice silencieuse.

24. Planeur selon une des revendications précédentes, **caractérisé** en ce que le planeur est d'une construction légère utilisant largement des fibres de carbone et/ou des fibres de carbone à haut module.
